# EUROPEAN PATENT APPLICATION

(11) **EP 1 523 089 A2**
(43) Date of publication of application: **13.04.2005**
(21) Application number: 04021363.9
(22) Date of filing: 08.09.2004
(51) Int. Cl.: H02P 5/00

(54) **Method for driving induction motor**

(30) Priority: 07.10.2003 JP 2003347771
(71) Applicant: TSUDAKOMA KOGYO KABUSHIKI KAISHA, Kanazawa-shi Ishikawa-Ken (JP)
(72) Inventor: Takashima, Makoto, Kanazawa-shi Ishikawa-ken 920-0952 (JP); Takano, Toshio, Matto-shi Ishikawa-ken 924-0019 (JP); Kato, Hiroaki, Suzuka-shi Mie-ken 513-8633 (JP)
(74) Representative: von Samson-Himmelstjerna, Friedrich R.

(57) **Abstract**

A method for driving an induction motor is provided, in which a variable-voltage variable-frequency inverter included in a driving device for the induction motor outputs an AC voltage to the induction motor to rotate the induction motor, the AC voltage corresponding to a frequency determined based on a rotational rate of the induction motor.

The method includes a first step for increasing an output frequency from a first frequency value to a second frequency value by the inverter during a steady operation of the induction motor, the inverter increasing an output voltage from a first normal-state voltage value to an overvoltage value as the output frequency approaches the second frequency value; and a second step for decreasing the output voltage from the overvoltage value to a second normal-state voltage value by the inverter while maintaining the output frequency at the second frequency value.

## Description

### BACKGROUND OF THE INVENTION

### 1. Field of the Invention

The present invention relates to a device and a method for driving an induction motor by supplying an AC voltage to the induction motor via a variable-voltage variable-frequency inverter. Specifically, the present invention relates to a device and a method for driving an induction motor, in which an induction motor in a steady operation mode is accelerated from the current rotational rate to a higher rotational rate, and the time required for the acceleration of the induction motor is shortened.

### 2. Description of the Related Art

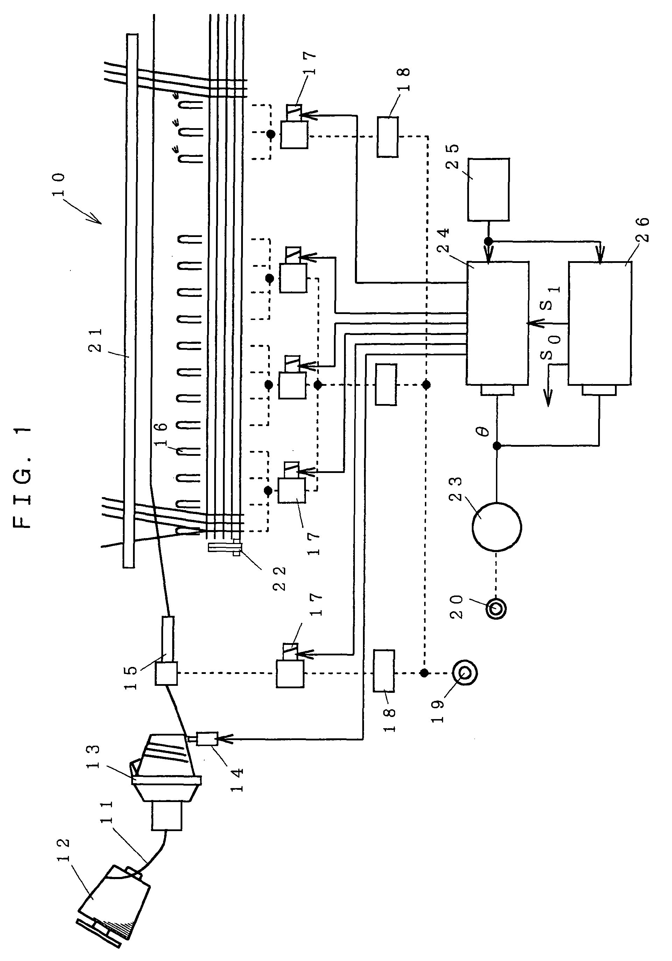

In common industrial machinery, a main shaft is generally driven by an induction motor. In textile machinery, such as looms, for example, it is necessary to set the operational rate of the loom (that is, the rotational rate of the main shaft of the loom) based on a weft-insertion rate or cloth specification. Such rate adjustment is achieved by controlling the outer periphery of a pulley connected with an output shaft of an induction motor, which is connected with a commercial power source. In recent years, variable-voltage variable-frequency inverters (which will be referred to as inverters hereinafter) are used as a driving power source in place of a commercial power source. According to an inverter, the rotational rate of the induction motor is adjusted by controlling the output frequency corresponding to the rotational rate. Japanese Unexamined Utility Model Registration Application Publication No. S61-90877 (P.1 to P.8 in the specification, Fig. 1) discloses an example of such an inverter. In such an inverter used for looms, the output frequency and the output voltage corresponding to the operational rate of the loom are determined based on a predetermined ratio between the output frequency and the output voltage (V/f ratio). Thus, a corresponding AC voltage is output to the induction motor so as to control the rotational rate of the induction motor.

The main shaft of the loom is connected with, for example, a beating unit and a warp-shedding unit, and the rotation of the main shaft is converted to an oscillating motion and a reciprocating motion via a motion-converting mechanism so that the beating unit and the warp-shedding unit can perform a beating motion and a warp-shedding motion, respectively. On the other hand, depending on the cloth specification, there are cases where the cloth construction of cloth to be woven is changed periodically during a weaving operation. This may generate large vibration (large ballistic) depending on the shedding motion by the warp-shedding unit (namely, a shedding pattern indicates the moving direction of each heald frame set according to each pick of an inserted weft yarn) or on the operational rate of the loom. Japanese Unexamined Patent Application Publication No. H1-229848 (P.2 to P.6 in the specification, Fig. 1) discloses a technology for preventing such vibration. Specifically, when the cloth construction is to be switched to another type of construction, that is, when the shedding pattern is changed, a corresponding target-rate value is output to the induction motor so as to change the operational rate of the loom.

Furthermore, in fluid jet looms, a weft yarn is jet out into a warp shed from a weft-insertion nozzle. Depending on the cloth specification, there are cases where multiple-color weft insertion is performed, in which the loom may periodically switch from one weft type to another based on a predetermined number of picks. For example, for weaving pile fabrics, the loom switches back and forth between a type of weft yarn having high flyability (which means that the weft yarn can be easily carried across the warp shed) and a type having low flyability depending on whether a pile segment or a ground segment of the cloth is being woven. Japanese Unexamined Patent Application Publication No. H5-78955 (P.2 to P.5 in the specification, Figs. 1 to 8) discloses an example of such a fluid jet loom. Similar to the technologies described above, the fluid jet loom is driven by a main-shaft driver which is provided with an induction motor and an inverter for supplying an AC voltage to the induction motor. To improve the productivity, the fluid jet loom selects a high target-rate value (i.e. high output frequency) for inserting high-flyability weft yarns so that the main shaft of the loom is rotated at a high rate, whereas the fluid jet loom selects a low target-rate value (i.e. low output frequency) for inserting low-flyability weft yarns so that the main shaft is rotated at a lower rate so as to obtain a sufficient time for each weft yarn to be carried across the warp shed.

In view of these circumstances, a loom needs to quickly change operational rates when weaving conditions are switched according to, for example, the cloth construction or the selected weft type. However, since the main shaft of the loom is connected with, for example, the beating unit and the warp-shedding unit, the main shaft has an extremely high moment of inertia. For this reason, even if the output frequency is switched from the current value to a higher value for changing the operational rate of the loom to a higher rate, for example, a sufficient amount of acceleration torque cannot be obtained based on the conventional methods in which an output voltage in a normal state corresponding to the switched output frequency is supplied. This is problematic due to the fact that it takes too much time to reach the final target rotational rate (that is takes more than a few picks to reach the target rate). In such a case, it is necessary to additionally set a weaving condition corresponding to the transient period in which the rotational rate changes, but this setting of the additional weaving condition for the transient period is generally done by trial and error, and for this reason, a proper adjustment for the setting is difficult. Such a problem exists not only in textile machinery like looms, but also in common industrial machinery that is driven by an induction motor and that needs to quickly accelerate the rotational rate of the induction motor in a steady operation.

### SUMMARY OF THE INVENTION

Accordingly, it is an object of the present invention to provide a device and a method for driving an induction motor, in which an induction motor in a steady operation mode is accelerated from the current rotational rate to a higher rotational rate, and the time required for the acceleration of the induction motor is shortened.

A first aspect of the present invention provides a method for driving an induction motor, in which a variable-voltage variable-frequency inverter included in a driving device for the induction motor outputs an AC voltage to the induction motor to rotate the induction motor, the AC voltage corresponding to a frequency determined based on a rotational rate of the induction motor. The method according to the first aspect includes: a first step for increasing an output frequency from a first frequency value to a second frequency value by the inverter during a steady operation of the induction motor, the inverter increasing an output voltage from a first normal-state voltage value to an overvoltage value as the output frequency approaches the second frequency value; and a second step for decreasing the output voltage from the overvoltage value to a second normal-state voltage value by the inverter while maintaining the output frequency at the second frequency value.

A second aspect of the present invention provides another method for driving an induction motor, in which a variable-voltage variable-frequency inverter included in a driving device for the induction motor outputs an AC voltage to the induction motor to rotate the induction motor, the AC voltage corresponding to a frequency determined based on a rotational rate of the induction motor. The method according to the second aspect includes: a first step for increasing an output frequency from a first frequency value to a second frequency value by the inverter during a steady operation of the induction motor, the inverter increasing an output voltage from a first normal-state voltage value to an overvoltage value, the overvoltage value corresponding to a third frequency value between the first frequency value and the second frequency value, and a third step for decreasing the output voltage from the overvoltage value to a second normal-state voltage value by the inverter, the second normal-state voltage value corresponding to the second frequency value.

The first normal-state voltage value and the second normal-state voltage value mentioned above refer to voltages to be supplied to a component subject to be driven, that is, the induction motor, so that the component can be continuously driven in a steady mode. In the variable-voltage variable-frequency inverter, the first normal-state voltage value and the second normal-state voltage value are determined based on the ratio between the output voltage and the output frequency, i.e. a V/f ratio. On the other hand, the overvoltage value is determined such that the value is greater than the first and second normal-state voltage values corresponding to the output frequency.

According to the first and second aspects, while the output frequency is increased from the first frequency value to the second frequency value during the steady operation of the induction motor, the inverter increases the output voltage from the first normal-state voltage value to the overvoltage value. Thus, the inverter allows the induction motor to generate a greater amount of output torque such that the induction motor can quickly reach a rotational rate corresponding to the second frequency value. Moreover, since the output voltage is subsequently decreased from the overvoltage value to the second normal-state voltage value by the inverter, the induction motor can operate continuously in an energy-saving mode.

With respect to the variable-voltage variable-frequency inverter that outputs a voltage in an overvoltage state, although the inverter outputs a voltage based on, for example, the V/f ratio, i.e. a target voltage corresponding to the output frequency, the inverter may alternatively output a voltage based on vector operation (that is, vector-control).

According to the switching process of the output frequency in the first aspect, the first frequency value may be increased to the second frequency value in an instant. Specifically, it is preferable that a first target voltage value corresponding to the second frequency value be preliminarily determined by the inverter, such that the inverter switches the output frequency from the first frequency value to the second frequency value in the first step, and switches the output voltage from the first normal-state voltage value to the overvoltage value in the first step based on the first target voltage value.

Furthermore, for increasing the output frequency according to the first and second aspects, the first frequency value may alternatively be gradually increased to the second frequency value. In that case, the output voltage may be increased to the overvoltage state based on the increase in the output frequency, or may alternatively be increased based on the first target voltage value determined according to a constant rate or a gradually-increasing rate such that the output voltage exceeds the first normal-state voltage value over the period in which the output frequency is increased. Specifically, it is preferable that the first target voltage value corresponding to the second frequency value be preliminarily determined by the inverter, such that the inverter gradually increases the output frequency from the first frequency value to the second frequency value in the first step, and gradually increases the output voltage from the first normal-state voltage value to the overvoltage value in the first step based on the first target voltage value.

Furthermore, the inverter may alternatively operate based on vector operation. Specifically, it is preferable that the inverter gradually increase the output frequency from the first frequency value to the second frequency value and compensate for a primary voltage and a slip frequency of the induction motor by a vector operation in the first step. Thus, in comparison with the inverter which outputs a voltage based on the V/f ratio, the inverter operating based on vector operation can control the output frequency, the output voltage, and the electric current corresponding to the rotational rate of the induction motor. This achieves more stable acceleration of the induction motor.

According to the first and second aspects, the inverter may perform the second step or the third step after a predetermined time period during which the overvoltage value corresponding to the second frequency value or the third frequency value, respectively, is output as the output voltage. By preliminarily determining the time period while taking into consideration the amount of load of the loom, an acceleration torque can always be obtained when the output frequency is changed. Alternatively, after increasing the output voltage from the first normal-state voltage value to the overvoltage value corresponding to the second frequency value or the third frequency value, respectively, in the first step, the inverter may perform the second step or the third step when the rotational rate of the induction motor substantially reaches a rotational rate corresponding to the second frequency value or the third frequency value. Consequently, the period for supplying the overvoltage value can be properly set based on the detected rotational rate regardless of the load conditions (the amount of load) of the induction motor. This may prevent overheating of the induction motor, and moreover, may reduce the power consumption of the induction motor. Alternatively, if there is no significant time lag between the increasing output frequency and the increasing rotational rate of the induction motor, the inverter may perform the second step or the third step after the output frequency reaches the second frequency value. For determining the rotational rate of the induction motor, the actual rotational rate may be measured. Alternatively, the slip-frequency value of the induction motor may be used as the rotational rate of the induction motor. In this case, the slip-frequency value substantially corresponds to the actual rotational rate and is determined based on the relationship between an output current value and an exciting current for the induction motor.

Furthermore, a second target voltage value for the output voltage in the second step or the third step may be preliminarily determined such that the second target voltage value changes at a predetermined rate. Moreover, the first target voltage value for the output voltage may be preliminarily determined such that the first target voltage value at the end of the first step is set higher than the second normal-state voltage value, and the second target voltage value for the output voltage may be preliminarily determined such that the second target voltage value for the second step or the third step decreases towards the second normal-state voltage value at a predetermined decreasing rate. Furthermore, the predetermined decreasing rate may be determined based on a secondary time constant of the induction motor. In detail, the secondary time constant of the induction motor is a specific value that relates to the responsiveness of the motor, and thus restrains the impact caused when the output voltage is being decreased during the second step. Furthermore, during the second step or the third step, when the output voltage is decreased from the overvoltage value to the second-normal-state voltage value corresponding to the second frequency value, the output voltage may alternatively be switched to the second-normal-state voltage value in an instant.

During the first step, or the subsequent second step or third step, the inverter may control an output torque for the induction motor so as to maintain an output current below a preliminarily-determined upper limit. This cuts back the output current from the inverter, thus contributing to the size reduction of the inverter as well as cost reduction.

Although the technology described above for driving an induction motor is commonly applied to industrial machinery, it is preferable that such technology be applied to textile machinery, such as looms. For example, to improve the productivity, when switching weaving conditions for weaving cloth by a loom that is in operation, it is necessary to change the operational rate of the loom as one weaving condition is switched to another. In comparison to the conventional technology, the present invention achieves quick change of the operational rate of the loom to improve the operating conditions of the loom.

### BRIEF DESCRIPTION OF THE DRAWINGS

Fig. 1 is a schematic diagram of a loom provided with a driving device for an induction motor according to the present invention;
Fig. 2 is a schematic diagram of the driving device;
Fig. 3 is an internal block diagram of an inverter control circuit included in the driving device according to a first embodiment of the present invention;
Fig. 4 is a conceptual diagram of a V/f pattern according to the inverter control circuit in Fig. 3;
Fig. 5 is a timing chart illustrating an output pattern of the frequency and the voltage of the driving device according to the first embodiment;
Fig. 6 is a timing chart of an alternative output pattern of the frequency and the voltage of the driving device according to the first embodiment;
Fig. 7 is a timing chart of another alternative output pattern of the frequency and the voltage of the driving device according to the first embodiment;
Fig. 8 is a timing chart of another alternative output pattern of the frequency and the voltage of the driving device according to the first embodiment;
Fig. 9 is a timing chart of another alternative output pattern of the frequency and the voltage of the driving device according to the first embodiment;
Fig. 10 is a timing chart of another alternative output pattern of the frequency and the voltage of the driving device according to the first embodiment;
Fig. 11 is an internal block diagram of an inverter control circuit included in the driving device according to a second embodiment of the present invention:
Fig. 12 is an internal block diagram of an alternative inverter control circuit included in the driving device according to the first embodiment; and
Fig. 13 is a block diagram illustrating an alternative structure of a main circuit provided in an inverter included in the driving device of the present invention.

### DESCRIPTION OF THE PREFERRED EMBODIMENTS

Preferred embodiments of the present invention will now be described with reference to the drawings.

### First Embodiment

Fig. 1 illustrates a loom 10 which is a type of textile machinery. Specifically, the loom 10 is a multiple-color air-jet loom which is capable of switching various types of weft yarns for weft insertion according to a predetermined number of picks, which is one of the weaving conditions. Moreover, the loom 10 is also capable of switching between different operational rates.

The loom 10 includes a yarn package 12 for feeding a weft yarn 11; a weft-measuring device 13; a stopping pin 14 disposed adjacent to the weft-measuring device 13; a main nozzle 15 for inserting a weft yarn 11 with an air jet; and sub-nozzles 16 for inserting a weft yarn 11 which are aligned parallel to the weft-traveling path and are disposed within a warp shed. The main nozzle 15 is connected with electromagnetic on/off valves 17 and pressure regulators 18 consisting of, for example, electro-pneumatic valves, via an air tank, which is not shown in the drawings. An air jet is discharged from the sub-nozzles 16 so as to accelerate the flying weft yarn 11. The sub-nozzles 16 aligned parallel to the weft-traveling path are divided into groups in the weft-insertion direction, and each group is connected to the corresponding pressure regulator 18 via the corresponding electromagnetic on/off valve 17 and the air tank. A common fluidic supply source 19 is connected to the pressure regulators 18 to supply compressed air to the pressure regulators 18. The loom 10 further includes a main shaft 20. The main shaft 20 is connected to other components included in the loom 10, such as a warp-shedding unit, not shown in the drawings; a reed 21; and a yarn cutter 22, via a motion-converting mechanism, which is also not shown in the drawings.

The weft-measuring device 13 includes a yarn-guiding drum which can be rotated to take up the weft yarn 11 around the periphery of the drum. Moreover, the weft yarn 11 wound around the drum is held by the stopping pin 14, which is set at a stand-by position. During the warp-shedding opening, a weft-insertion device 24, which will be described later in detail, sets the stopping pin 14 to a non-contact position so that the weft yarn 11 wound around the drum is set in a releasable state. With the opening and closing motion of the electromagnetic on/off valves 17, the main nozzle 15 and the sub-nozzles 16 emit compressed air in a relay manner so that the weft yarn 11 is released from the weft-measuring device 13 and is inserted through the shed. When a predetermined length of weft yarn 11 is released, the weft-insertion device 24 sets the stopping pin 14 back to the stand-by position so that the weft yarn 11 is held by the stopping pin 14. As shown in Fig. 1, this completes one cycle of a weft insertion process. Then, the inserted segment of the weft yarn 11 is beaten against the cloth fell with the reed 21, and the yarn cutter 22 cuts one of the ends of the inserted segment of the weft yarn 11. After repeating this cycle, multiple weft yarns 11 are interwoven with the warp yarns. As previously mentioned, the loom 10 is a multiple-color air-jet loom and is thus capable of selecting which color-type of weft yarn is to be inserted based on a weft-insertion pattern set preliminarily before each operation of the loom 10. For this reason, in an air jet loom of this type, multiple sets of length-determining components, such as the yarn package 12, the weft-measuring device 13, and the stopping pin 14, are generally provided, and each set corresponds to each weft type. Similarly, corresponding to various weft types, multiple sets of main nozzles 15, electromagnetic on/off valves 17, and pressure regulators 18 are provided respectively. In Fig. 1, however, only one of these multiple sets of components is illustrated and the other sets are omitted to provide a simple illustration.

For selectively inserting a corresponding type of weft yarn 11, the loom 10 further includes a selection-signal generator 26 and the weft-insertion device 24. The selection-signal generator 26 and the weft-insertion device 24 are both connected to a setting unit 25, and are capable of receiving a main-shaft-rotational-angle signal θ from an angle detector 23, which is connected with the main shaft 20. Furthermore, a weft-insertion condition and a weft-insertion pattern for each operation of the loom 10 are set in the weft-insertion device 24 and the selection-signal generator 26 via the setting unit 25. Here, the weft-insertion pattern is for generating, for example, a weft-type selection signal S₁. Based on the pattern, the selection-signal generator 26 outputs the weft-type selection signal S₁ to the weft-insertion device 24 every time ,when the input main-shaft-rotational-angle signal θ reaches a predetermined value. On the other hand, weft types and weft-insertion conditions corresponding to the operational rate of the loom 10 are preliminarily set in the weft-insertion device 24. Based on the weft-type selection signal S₁, the weft-insertion device 24 selects control data that corresponds to the weft-insertion condition of the selected type of weft yarn 11. When the main-shaft rotational angle θ reaches the predetermined value, the weft-insertion device 24 sends a driving signal corresponding to the selected type of weft yarn 11 to the stopping pin 14 and the electromagnetic on/off valves 17 so that each cycle of the weft-insertion process can be performed based on the weft-insertion condition corresponding to the selected type of weft yarn 11.

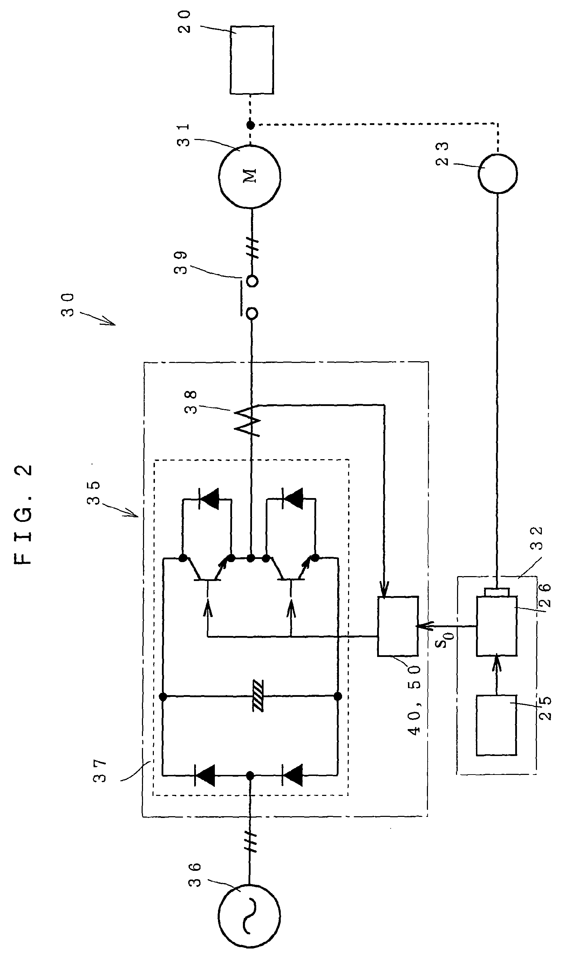

Fig. 2 illustrates a main-shaft driving element 30 included in a driving device for an induction motor according to the present invention. The main-shaft driving element 30 mainly includes a frequency controlling unit 32 for generating a frequency-selection signal S₀; a three-phase induction motor 31 whose output shaft is connected with the main shaft 20; and a variable-voltage variable-frequency inverter 35 for supplying AC power corresponding to the output frequency to the induction motor 31 in response to the frequency-selection signal So.

The frequency controlling unit 32 includes the selection-signal generator 26 and the setting unit 25 connected with the selection-signal generator 26. In addition to outputting the weft-type selection signal S₁ to the weft-insertion device 24, as described above, the selection-signal generator 26 has the following function. Via the setting unit 25, a frequency selection pattern, which includes frequency data corresponding to a weft-insertion pick-count value, is set in the selection-signal generator 26. Accordingly, when the main shaft 20 is rotated to a predetermined angle, the selection-signal generator 26 generates the frequency-selection signal So corresponding to the pick-count value based on the frequency selection pattern. The frequency-selection signal S₀ is then output to an inverter control circuit 40, which will be described later.

The inverter 35 includes an inverter main circuit 37; a current detector 38, such as a shunt resistor; and the inverter control circuit 40. Specifically, the inverter main circuit 37 is provided with a diode rectifier and a smoothing capacitor which convert an AC voltage from a commercial power source 36 to a DC voltage, and is also provided with two bridge-connected antiparallel circuits, namely, a transistor and a diode, for converting the DC voltage to a desired AC voltage. The current detector 38 is for detecting the electric current output from the inverter main circuit 37. The inverter control circuit 40 has two functions. Specifically, one of the functions is that the inverter control circuit 40 generates a base driving signal for turning the transistor on and off by, for example, pulse-width modulation (PWM) so that the inverter main circuit 37 can output a desired voltage and a desired frequency. The other function is that, when the value detected by the current detector 38 exceeds a preliminarily-determined upper limit value (for example, about 150% of the rated output current value of the inverter main circuit 37), the inverter control circuit 40 lowers the output voltage of the inverter main circuit 37 so as to set the output current below the upper limit value. The output end of the inverter 35 is delta-connected to the primary winding of the induction motor 31 via an electromagnetic switch 39 in an ON state.

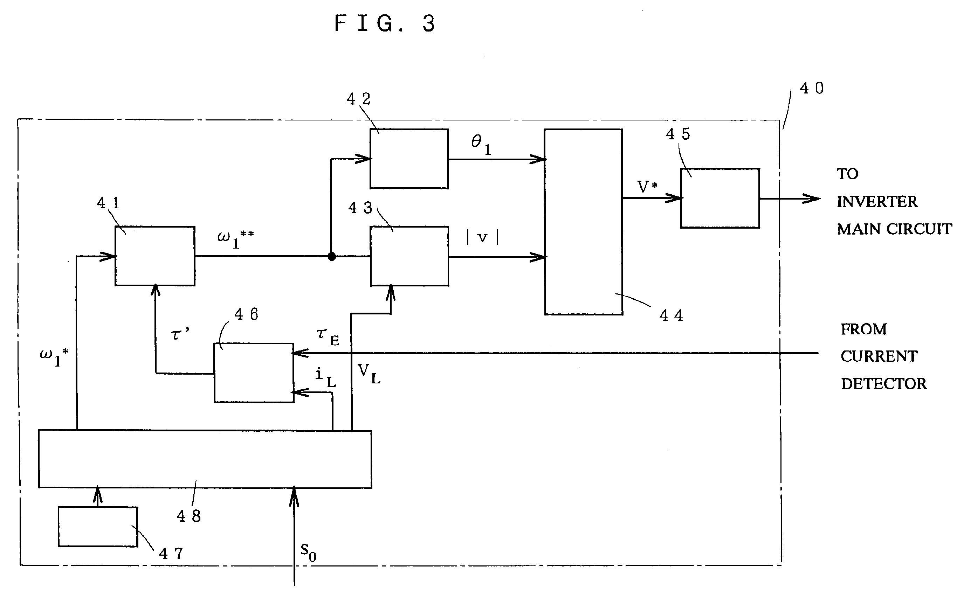

Fig. 3 is an internal block diagram of the inverter control circuit 40 included in the inverter 35 of Fig. 2.

The inverter control circuit 40 includes a rate-adjusting calculator 41, an integrator 42, an F/V converter 43, a target-voltage calculator 44 which receives output from the integrator 42 and the F/V converter 43, a PWM calculator 45, a proportion/integral calculator (P-I calculator) 46, a target-value control circuit 48, and a setting unit 47 connected with the target-value control circuit 48.

The target-value control circuit 48 outputs control data to each of the control units connected to the target-value control circuit 48 and also outputs various types of command signals corresponding to a change in frequency. According to a preliminarily-determined frequency increasing rate or frequency decreasing rate, the rate-adjusting calculator 41 adjusts a target frequency value ω₁* for the induction motor 31 received from the target-value control circuit 48 so as to output a final target frequency value ω₁** equivalent to the adjusted target frequency value ω₁*. Furthermore, when the induction motor 31 in steady operation starts to accelerate, the P-I calculator 46 determines an acceleration time τ' that prevents the current value detected by the current detector 38 from exceeding an upper-limit current value i_{L} received from the target-value control circuit 48. Thus, based on the acceleration time τ', the rate-adjusting calculator 41 outputs the target frequency value ω₁** corresponding to the frequency increasing rate. The target frequency value ω₁** output from the rate-adjusting calculator 41 is input to the integrator 42 and the F/V converter 43. The integrator 42 integrates the input target frequency value ω₁** with respect to time t to derive a phase-angle value θ₁, and outputs the phase-angle value θ₁ to the target-voltage calculator 44. On the other hand, based on the input target frequency value ω₁** and a preliminarily-determined V/f ratio (V/f pattern), the F/V converter 43 determines a voltage value |V|, and outputs the voltage value |V| to the target-voltage calculator 44. The target-voltage calculator 44 converts the phase-angle value θ₁ and the voltage value |V| into a target voltage V* for each phase of the induction motor 31. The target-voltage calculator 44 then outputs the target voltage V* to the PWM calculator 45. The PWM calculator 45 generates an on/off driving signal corresponding to the target voltage V* as a base driving signal, and sends the signal to each transistor included in the inverter main circuit 37.

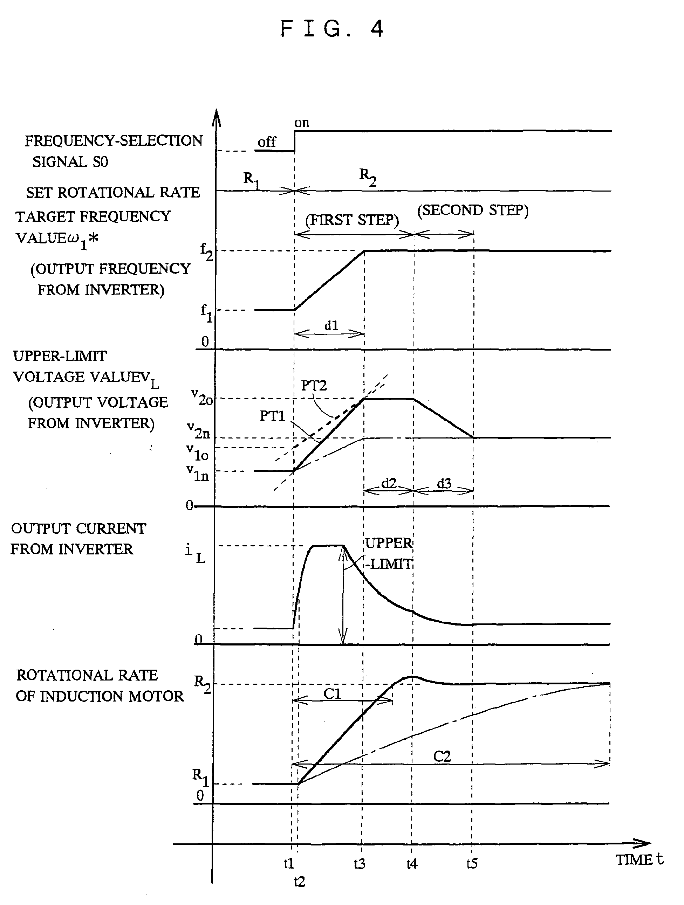

Referring to Figs. 3 and 4, the setting unit 47 stores control data for controlling the output frequency and the output voltage when the induction motor 31 is activated, deactivated, or operated in a steady mode. Specifically, the control data includes, for example, an increasing rate of the output frequency at the activation point of the induction motor 31, and a decreasing rate of the output frequency at the termination point of the induction motor 31. Moreover, for controlling the output frequency during the steady operation of the induction motor 31, the control data also includes a plurality of frequency values f₁ and f₂ corresponding to, for example, operational rates (rotational rates) preliminarily set by an operator before each operation of the loom 10; length values for a first period (consisting of sub-periods d₁ and d₂) during which the output voltage is increased to reach an overvoltage state; a length value for a second period (d₃) during which the overvoltage state is changed to a normal state; a first output-voltage pattern corresponding to the first period, in which an upper-limit voltage value V_{L} for the target voltage V* is set in the overvoltage range; and a second output-voltage pattern corresponding to the second period, in which the upper-limit voltage value V_{L} for the target voltage V* is changed from the value in the overvoltage range to a lesser value within the normal range.

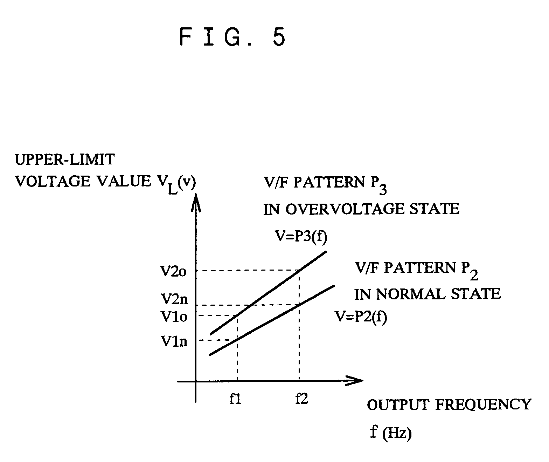

With reference to Fig. 4 and to a wave-form chart illustrated in Fig. 5, the operation of the inverter control circuit 40 in Fig. 3 will now be described. The loom 10, i.e. a multiple-color air-jet loom, operates at a low operational rate R₁ (i.e. the rotational rate R₁ of the induction motor 31) for performing a weft-insertion process for a type of weft yarn C₁ having low flyability, which refers to a type of weft yarn C₁ that cannot be easily carried across the warp shed. When the current type of weft yarn C₁ is switched to another type of weft yarn C₂ having high flyability, the rotational rate R₁ of the induction motor 31, i.e. the rotational rate of the main shaft 20, is switched to a higher rotational rate R₂. In detail, the output frequency of the inverter 35 is gradually increased at a predetermined increasing rate so that a first frequency value f₁ corresponding to the rotational rate R₁ is increased to a second frequency value f₂ corresponding to the rotational rate R₂. Moreover, the inverter control circuit 40 performs a first step, corresponding to the first period, for outputting a voltage such that the output voltage is gradually increased to reach the overvoltage state. Subsequently, while maintaining the output frequency at the second frequency value f₂, the inverter control circuit 40 performs a second step, corresponding to the second period, for gradually decreasing the output voltage at a predetermined decreasing rate until the output voltage reaches the normal state.

The state illustrated in Fig. 4 is a state in which the low-flyability weft yarn C₁ is selected and an OFF output of the frequency-selection signal So is not switched to an ON output. In this state, the loom 10 needs to expand the time period of each weft-insertion cycle for inserting the low-flyability weft yarn C₁, and referring to Figs. 2, 4, and 5, the frequency selection signal So is output from the frequency controlling unit 32 is in an OFF state. Based on the first frequency value f₁ for the low rotational rate R₁ corresponding to the frequency selection signal So in the OFF state and on a preliminarily-determined V/f pattern P₂ for outputting a voltage in the normal range, the inverter 35 outputs an AC voltage, i.e. a normal-state voltage value V₁ₙ.

Referring to Figs. 3 and 4, based on the stored weft-insertion pattern, when a predetermined number of picks of weft yarns (weft type) C₁ are inserted, the selection-signal generator 26 sends a command signal for switching the current weft type C₁ to the high-flyability type of weft yarn C₂ and for correspondingly switching the rotational rate R₁ to the rotational rate R₂. Consequently, at time t₁, the selection-signal generator 26 outputs the corresponding weft-type selection signal S₁ and the corresponding frequency-selection signal So in an ON state. Subsequently, the target-value control circuit 48 outputs the second frequency value f₂, acting as the target frequency value ω₁*, to the rate-adjusting calculator 41. Moreover, based on a preset output-voltage pattern PT₁ for increasing the voltage to the overvoltage range, the target-value control circuit 48 raises the upper-limit voltage value V_{L} such that the normal-state voltage value V₁ₙ, corresponding to the first frequency value f₁, is gradually increased to an overvoltage value V₂ₒ. Because the P-I calculator 46 calculates an acceleration time τ' that prevents the output current value detected by the current detector 38 from exceeding the upper-limit current value i_{L} received from the target-value control circuit 48, the rate-adjusting calculator 41 can increase the target frequency value ω₁** over the sub-period d₁ of the first period at an increasing rate corresponding to the acceleration time τ'. Thus, the increasing target frequency value ω₁** is output from the rate-adjusting calculator 41, and the output frequency and the output voltage from the inverter 35 are thus gradually increased based on the predetermined increasing rate, thereby accelerating the induction motor 31.

Subsequently, when the output frequency from the inverter 35 reaches the second frequency value f₂ at time t₃ in Fig. 4, the rate-adjusting calculator 41 stops increasing the target frequency value ω₁**. Moreover, the target-value control circuit 48 stops raising the upper-limit voltage value V_{L} based on the output-voltage pattern PT₁. Accordingly, this completes the first step, which corresponds to the first period consisting of the sub-periods d₁ and d₂ and extends from time t₁ to time t₄. Subsequently, a second step, which corresponds to the second period d₃ and extends between time t₄ and time t₅, is performed. In the second period d₃, the inverter 35 maintains the output frequency at the second frequency value f₂ but reduces the output voltage based on the output-voltage pattern PT₁ such that the overvoltage value V₂ₒ is gradually decreased to a normal-state voltage value V₂ₙ based on the upper-limit voltage value V_{L} received from the target-value control circuit 48, as shown in Fig. 4. From the subsequent operation onward, the induction motor 31 operates in an energy-saving mode.

Accordingly, the setting unit 47 presets the output-voltage pattern PT₁ used over the first period, i.e. the sub-periods d₁ and d₂, and the second period d₃ such that the upper-limit voltage value V_{L} is increased at a constant rate from the first frequency value f₁ to the second frequency value f₂ in the sub-period d₁; that the overvoltage value V₂ₒ is maintained in the sub-period d₂; and that the overvoltage value V₂ₒ is reduced to the normal-state voltage value V₂ₙ at a predetermined rate in the second period d₃. The increasing rate and the decreasing rate may respectively be determined based on the length of the sub-period d₁ and the length of the second period d₃. In contrast, the length of the sub-periods d₁ and d₂ and the length of the second period d₃ may be determined from the increasing rate and the decreasing rate, which are based on the characteristics of the induction motor 31, for example, the secondary time constant of the motor 31. Accordingly, the output-voltage pattern PT₁ may take other forms. Furthermore, although the target voltage V* is changed based on the predetermined output-voltage pattern PT₁ in the above description, it is also possible to output a target voltage based on a time function instead of applying an output-voltage pattern.

Referring to Fig. 4, the length of sub-periods d₁ and d₂ may be adjusted based on the conditions when the actual rotational rate reaches a predetermined value. Furthermore, in place of the output-voltage pattern PT₁, an alternative pattern (an output-voltage pattern PT₂ indicated by a dashed line in Fig. 4) may be used. According to the output-voltage pattern PT₂, the output voltage is in an overvoltage state (overvoltage value V₁ₒ) from the starting point of increase of the output frequency. In detail, referring to Fig. 5, two V/f patterns, i.e. the V/f pattern P₂ corresponding to the normal state and a V/f pattern P₃ corresponding to the overvoltage state, are preset in the target-value control circuit 48. Thus, based on the V/f pattern P₃ selected in conjunction with the generation of the frequency-selection signal So, a corresponding upper-limit voltage value V_{L} is output so as to achieve the output-voltage pattern PT₂. Consequently, the overvoltage state can be achieved simultaneously with the change in frequency so that a greater acceleration torque can be applied to the induction motor 31. However, this may cause the output current from the inverter 35 to simultaneously reach the preliminarily-determined upper-limit current value i_{L}. For this reason, for controlling the increase of the output frequency and the output voltage, instead of applying the output-voltage pattern PT₂, it is more preferable to apply the output-voltage pattern PT₁, indicated by a solid line in Fig. 4, in which the output voltage starts increasing from the normal-state voltage value V₁ₙ.

Furthermore, although the output current from the inverter 35 is controlled based on the preliminarily-determined upper-limit current value i_{L}, the upper-limit current value i_{L} may be adjustable. Moreover, the upper-limit current value i_{L} may be set in a planned manner. For the purpose of comparing with a conventional method, dotted-chain lines shown in Fig. 4 illustrate the normal-state voltage output from the inverter corresponding to the increasing frequency, and the rotational rate of the induction motor according to such a conventional method. As shown in Fig. 4, even if the frequency according to the conventional method and the frequency according to the present invention are increased at the same rate, the conventional method requires a longer time C₂ for reaching the target rotational rate R₂, whereas the method according to the present invention requires a lesser amount of time C₁ due to the overvoltage supply for the induction motor 31 for increasing the torque for the induction motor 31.

In a typical loom, the primary winding of the induction motor is delta-connected to the inverter when the induction motor is activated and the primary winding of the induction motor is star-connected to the inverter when the induction motor is in a steady operation mode. This allows the rotational rate of the induction motor to reach the target rate quicker so as to prevent improper beating motion against the cloth fell at the start of the operation caused by insufficient torque. For changing the output frequency for such an induction motor, it is preferable that the upper-limit voltage value V_{L} in the overvoltage state be √3 times the upper-limit voltage value V_{L} in the normal state. However, it is not limited to such a value as long as the upper-limit voltage value V_{L} in the overvoltage state is more than one times the amount of the upper-limit voltage value V_{L} in the normal state and does not cause overheating of the motor. Furthermore, for activating such a loom, it is preferable to apply the technology previously disclosed by the applicants of the present invention in Japanese Patent Application No. 2002-267779, but in a case where it is necessary to change the operational rate of the loom (rotational rate of the induction motor) with respect to the cloth specification, the above technology may be used in combination with the technology of the present invention.

In the first embodiment, although the output frequency and the output voltage are gradually increased as the first frequency value f₁ approaches the second frequency value f₂, the output frequency and the output voltage may be increased in various manners.

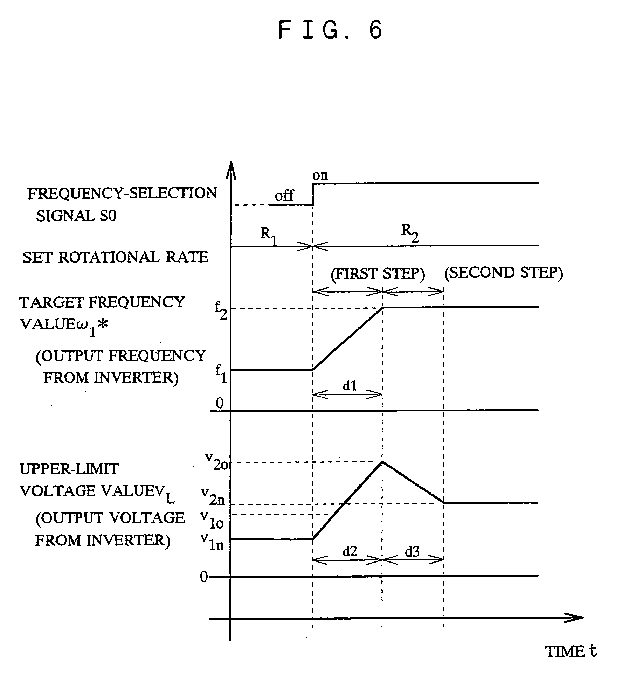

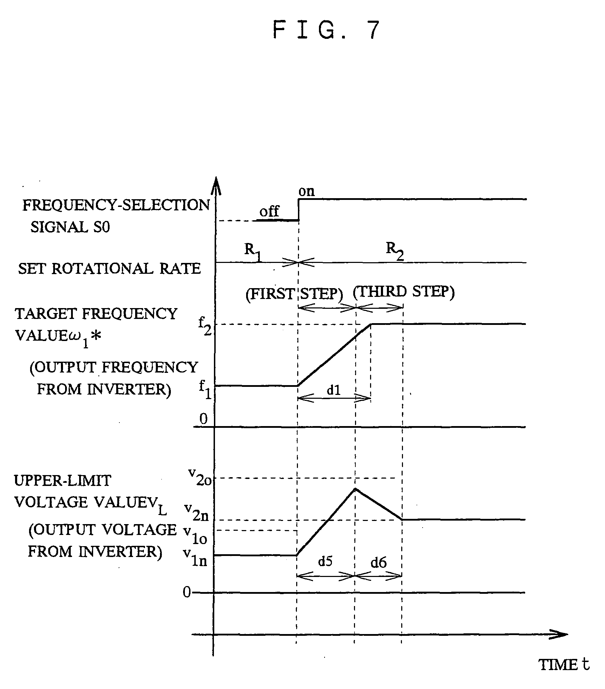

According to the above description, the second step for lowering the output voltage starts after the sub-period d₁, in which the output frequency and the output voltage are simultaneously increased, and sub-period d₂, in which the output frequency and the output voltage are constantly maintained. The length of the sub-period d₂ can be shortened if the rotational rate is increased with the increase in the output frequency such that the rate quickly reaches the target rotational rate R₂. For example, referring to Fig. 6, the output voltage may be decreased immediately after the increase of the output frequency is completed. Referring to Fig. 7, for further shortening the length of the sub-period d₂, it is possible to start lowering the output voltage from the overvoltage state to the normal state when the output frequency reaches a third frequency value f₃, which is set between the first frequency value f₁ and the second frequency value f₂. In such a case, the third frequency value f₃ is preferably equal to or greater than the average of the values f₁ and f₂, and is more preferably a value less than the value f₂ but in close proximity to the value f₂.

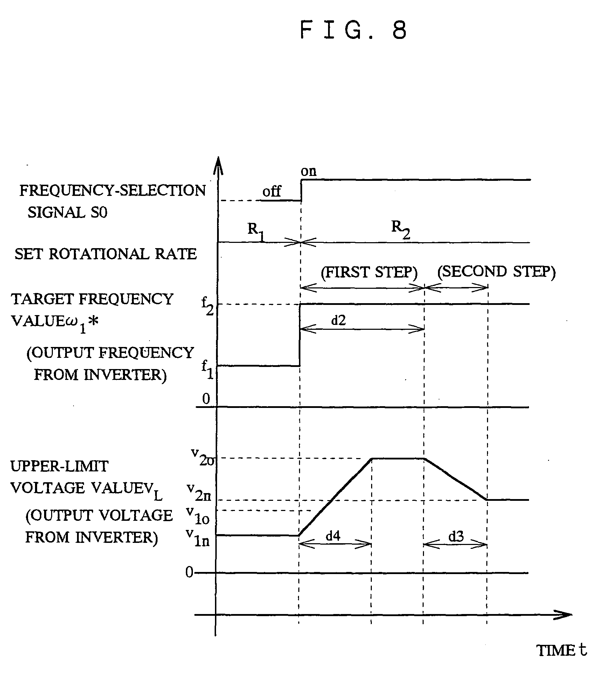

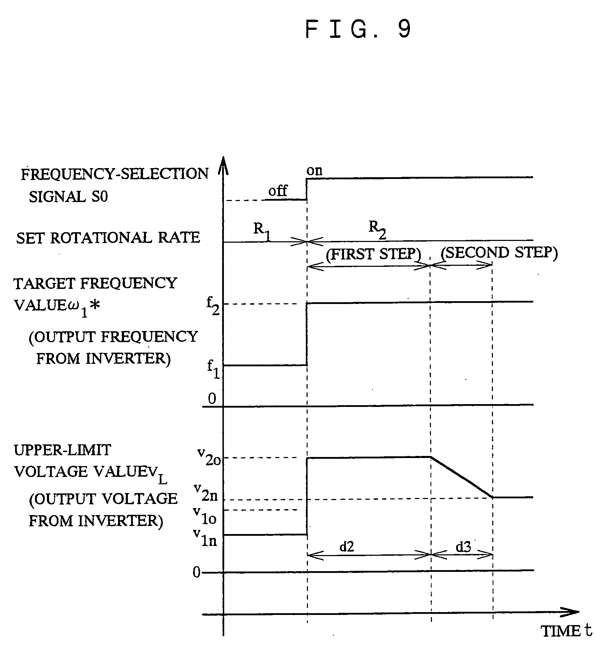

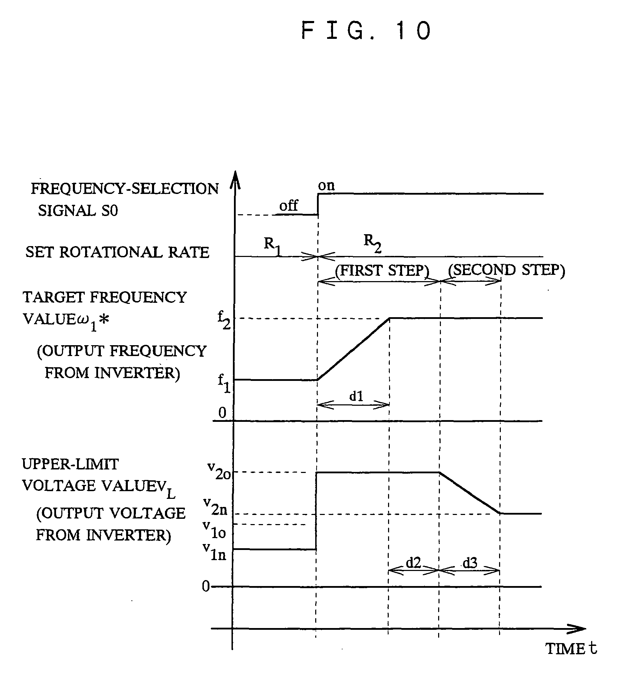

Furthermore, referring to Fig. 4, although the output frequency increases at a constant rate in the sub-period d₁ of the first step, the output frequency may alternatively be switched from the first frequency value f₁ to the second frequency value f₂ just as the frequency-selection signal S₀ is switched from the OFF state to the ON state. Figs. 8 and 9 illustrate such alternative examples, each having a different increasing pattern of the output voltage. Referring to Fig. 9, the output voltage reaches the overvoltage value V₂ₒ simultaneously with the switching of the output frequency and is then output for a certain period of time. On the other hand, referring to Fig. 8, the output voltage increases at a constant rate towards the overvoltage value V₂ₒ after the switching of the output frequency. In contrast, Fig. 10 illustrates an example in which the output frequency is gradually increased over the sub-period d₁ while the output voltage is switched to the overvoltage value V₂ₒ just as the frequency-selection signal S₀ is switched from the OFF state to the ON state. In such examples described above, the overvoltage value V₂ₒ may be any value that is greater than the normal-state voltage value V₂ₙ.

Furthermore, although the output frequency is gradually increased at a constant rate in Fig. 4 of the first embodiment, the output frequency may alternatively be, for example, curvilinearly increased such that the increasing rate changes in sequence. Furthermore, instead of decreasing the output voltage (upper-limit voltage value V_{L}) gradually at a constant decreasing rate, the decreasing rate of the output voltage may alternatively change in sequence in a curvilinear manner such that the decreasing rate gradually becomes higher or that the decreasing rate is high at first and becomes lower as time proceeds. Furthermore, instead of increasing or decreasing the output frequency and the output voltage gradually in a continuous manner, the output frequency and the output voltage may alternatively be increased or decreased in a staircase manner. Moreover, after the completion of the first step, instead of gradually changing the output voltage at a predetermined rate, as described above, the output voltage may alternatively be immediately switched to the normal-state voltage value V₂ₙ corresponding to the second frequency value f₂.

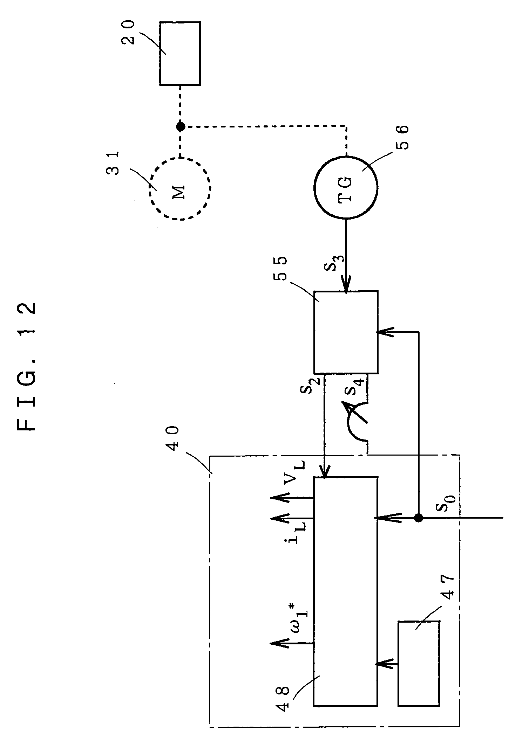

Furthermore, although the starting point of the second step is controlled based on the length of time passed from the output of the frequency-selection signal S₀ in the ON state, the starting point of the second step may alternatively be controlled based on the main-shaft-rotational-angle signal θ. Furthermore, it is more preferable that the decrease of the output voltage in the second step be started when the rotational rate of the induction motor 31 reaches a predetermined value and the predetermined value is thus detected. Fig. 12 illustrates such an alternative example. Here, the target-value control circuit 48 is connected to a comparator 55. The comparator 55 is connected to a rate detector 56, which is connected with the output shaft of the induction motor 31. The comparator 55 receives a rate signal S₃ from the rate detector 56 and compares the rate signal S₃ with a threshold value S₄, corresponding to the second frequency value f₂, set in the setting unit 47 so as to generate a logical signal S₂. Thus, the detection of the rotational rate reaching the predetermined value may be performed based on the logical signal S₂. Furthermore, for the detection of the rotational rate reaching the predetermined value, it is not necessarily limited to actual measurements of the rotational rate. For example, a calculator for calculating a value (such as a slip frequency value which will be described later), which substantially corresponds to the actual rotational rate, may alternatively be used for detecting the rotational rate.

### Second Embodiment

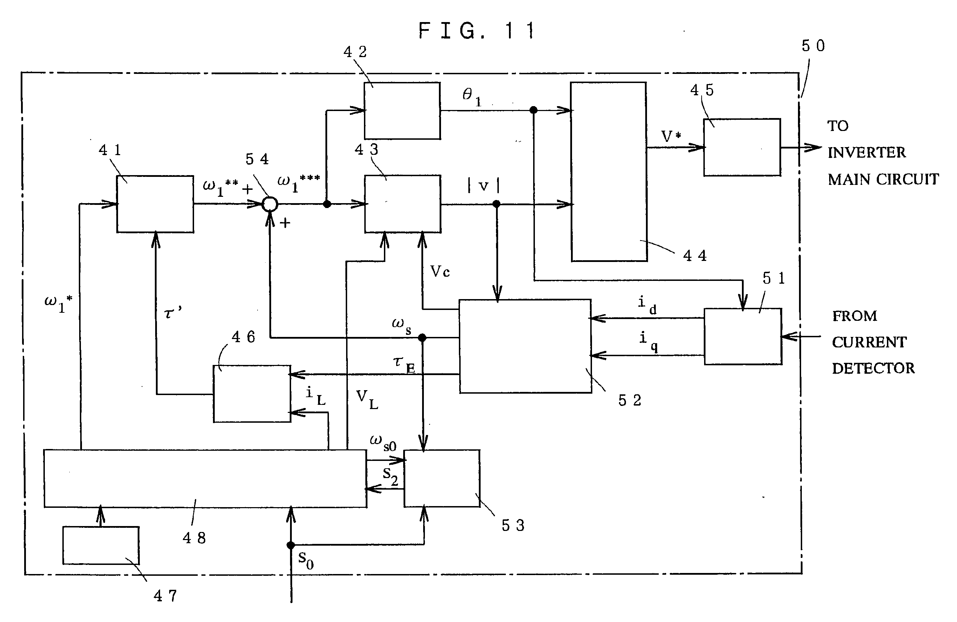

In contrast to the inverter 35 of the first embodiment which controls the output voltage based on the V/f ratio, the inverter 35 of the second embodiment controls the output voltage based on vector operation. Fig. 11 is an internal block diagram of an inverter control circuit 50 included in the inverter 35 of the second embodiment. Specifically, in the inverter control circuit 50, a slip frequency value ωₛ is detected as the rotational rate of the induction motor 31. When the slip frequency value ωₛ exceeds a predetermined threshold value ωₛ₀, which is determined based on an increased frequency value, the output voltage is lowered from the overvoltage value to the normal-state-voltage value. The inverter control circuit 50 of the second embodiment is provided with the same components included in the inverter control circuit 40 of Fig. 3. These components are indicated with the same reference numerals in the inverter control circuit 50 of Fig. 11, and descriptions of the components will thus be omitted. In addition to these components, the inverter control circuit 50 of the second embodiment is further provided with a vector-arithmetic unit 52, a coordinate converter 51, and a slip-frequency-reaching detector 53 having a similar function to the previously-described comparator 55.

Referring to Fig. 11, the coordinate converter 51 in the inverter control circuit 50 performs coordinate conversion for the current value detected by the current detector 38 based on the phase-angle value θ₁ from the integrator 42, and separates the converted current value into a current component i_{d} and a current component iq. The current component i_{d} is in phase with an exciting current for the induction motor 31, and the current component iq is in phase with a torque current for the induction motor 31. Based on the current component i_{d}, the current component iq, the voltage value |V|, and an electrical numerical constant of the induction motor 31 preliminarily input to the vector-arithmetic unit 52 via the setting unit 47, the vector-arithmetic unit 52 calculates the slip frequency value ωₛ according to a known process. Subsequently, the slip-frequency-reaching detector 53 compares the slip frequency value ωₛ with the threshold value ωₛ₀ which is output from the target-value control circuit 48 and corresponds to the rotational rate of the induction motor 31 in a steady operation. When the slip frequency value ωₛ reaches the threshold value (ωₛ₀, the slip-frequency-reaching detector 53 outputs a rate-reaching signal, i.e. a logical signal S₂, to the target-value control circuit 48.

The inverter control circuit 50 is further provided with an adder 54 disposed between the rate-adjusting calculator 41 and the integrator 42 or between the rate-adjusting calculator 41 and the F/V converter 43. A first input terminal of the adder 54 receives the target frequency value ω₁* from the rate-adjusting calculator 41, and a second input terminal of the adder 54 receives the slip frequency value ωₛ from the vector-arithmetic unit 52. The adder 54 adds the target frequency value ω₁* and the slip frequency value ωₛ together and outputs a sum value, i.e. a target frequency value ω₁***, to the integrator 42 and the F/V converter 43. This implies that the target frequency value ω₁*** increases with respect to the increase of the slip frequency value ωₛ. Moreover, the vector-arithmetic unit 52 generates a vector-arithmetic signal V_{c} and sends the signal V_{c} to the F/V converter 43. Consequently, the inverter control circuit 50 performs a known vector operation for controlling the output frequency and the output voltage with respect to the rotational rate of the induction motor 31. In addition to such a vector operation, it is preferable that the inverter control circuit 50 compensate for a primary voltage and the slip frequency so that the rotational rate of the induction motor 31 can be controlled with higher precision.

On the other hand, the slip-frequency-reaching detector 53 receives the frequency-selection signal So, the slip frequency value ωₛ calculated by the vector-arithmetic unit 52, and the threshold value ωₛ₀ output from the target-value control circuit 48 used for comparison purposes. After comparing the slip frequency value ωₛ with the threshold value ωₛ₀, the slip-frequency-reaching detector 53 generates the logical signal S₂ based on the comparison result and outputs the signal S₂ to the target-value control circuit 48. Accordingly, once the frequency-selection signal So is generated and the slip frequency value ωₛ, corresponding to the rotational rate of the induction motor 31, reaches the threshold value ωₛ₀, which is determined in view of the second frequency value f₂, the slip-frequency-reaching detector 53 outputs the corresponding logical signal S₂ to the target-value control circuit 48. Thus, the target-value control circuit 48 confirms that the rotational rate of the induction motor 31 has reached the target threshold value and starts decreasing the upper-limit voltage value V_{L} such that the overvoltage value V₂ₒ is gradually decreased towards the normal-state voltage value V₂ₙ. Accordingly, by detecting the rotational rate of the induction motor 31 reaching the predetermined value, the second step for decreasing the overvoltage value V₂ₒ to the normal-state voltage value V₂ₙ can be performed.

This can reduce, for example, the amount of overshoot of the rotational rate, as shown in Fig. 4. Furthermore, it is not limited to the inverter 35 of the second embodiment, which operates based on vector operation, for performing the second step based on the detection of the rotational rate. Alternatively, the inverter 35 of the first embodiment, which operates based on the V/f ratio, may also be applied. In detail, a detector for detecting the slip frequency value ωₛ, similar to the one in the second embodiment, may be provided in the inverter control circuit 40 of the inverter 35 of the first embodiment. In that case, the threshold value ωₛ₀ corresponding to the rotational rate may be equivalent to the second frequency value f₂ or may be a value that is in close proximity to the second frequency value f₂.

The following modifications are included in the scope of the present invention. With respect to the output of the frequency-selection signal S₀, although the above embodiments describe an example of switching from a first rotational rate of the induction motor 31 to a second rotational rate, the second rotational rate may further be switched to a third rotational rate and so on. Furthermore, the present invention may be applied based on the amount of change in the rotational rate when the rotational rate is being accelerated. In that case, a voltage in an overvoltage state may be output only when the amount of change in the rotational rate is large so as to save energy.

Furthermore, although the frequency-selection signal S₀ is output from the frequency controlling unit 32 in the above embodiments, the frequency controlling unit 32 may directly output a target frequency value, with, for example, an analog signal or a digital signal. In this case, the inverter 35 may analyze the rate of gradual change in the target frequency value to determine the acceleration of the induction motor 31 so that the inverter 35 can output a corresponding overvoltage value. Accordingly, the output method from the frequency controlling unit 32 is not limited and is thus flexible.

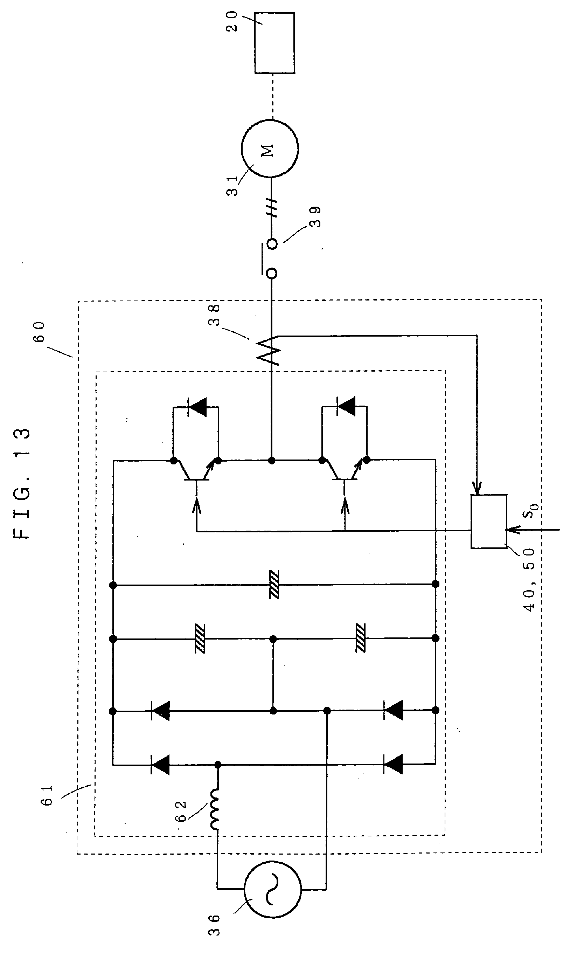

Furthermore, although the primary winding of the induction motor 31 is delta-connected to the inverter 35 in the above embodiments, the primary winding of the induction motor 31 may alternatively be star-connected to the inverter 35. Fig. 13 illustrates such an alternative example. When supplying a voltage of an overvoltage value to the primary winding of the induction motor 31 to activate the induction motor 31, an inverter 60 shown in Fig. 13 may be used if the induction motor 31 requires a voltage that is higher than the peak voltage supplied by the commercial power source 36. The inverter 60 is provided with a main circuit 61 which is a voltage doubler circuit including a reactor 62, diodes, and capacitors. In detail, the commercial power source 36, which is a single-phase commercial power source, supplies power to the capacitors via the reactor 62 and the diodes such that the peak voltage from the commercial power source 36 is doubled when the voltage reaches the capacitors. Alternatively, the commercial power source 36 may be a multiphase power source, such as a three-phase power source. Furthermore, as an alternative to the main circuit 61 and the reactor 62, a known chopper circuit may be used to generate a high voltage. Moreover, in the above embodiments, a transformer, which is not shown in the drawings, may be provided for the inverters 35 and 60 so that the voltage supplied by the commercial power source can be multiplied when the voltage reaches the capacitors.

With respect to the control method of the inverters 35 and 60 described above, there are generally two types; one of which is a current controlling type in which the inverter 35 or 60 controls the electric current of the induction motor 31, and the other one is a voltage controlling type in which the inverter 35 or 60 controls the voltage applied to the induction motor 31. In a case where the inverter 35 or 60 is the voltage controlling type, a PAM style for modulating a DC voltage or a PWM style for modulating the pulse width of a switching pulse of the transistors may be applied. If the PWM style is applied, it is more preferable that the method be a quasi-sinewave PWM type. According to this type, the pulse width of the switching pulse of the transistors is modified such that the waveform of the average output voltage is adjusted to form a better sinewave. In the PAM style, the PWM style, or the quasi-sinewave PWM style, the output voltage in the present invention relates to the average value (an effective value) of the output voltage and not to the peak value of a chopped-output voltage.

As shown in Figs. 3 and 11, although the inverter control circuits 40 and 50 each include a plurality of control units (i.e. the rate-adjusting calculator 41, the integrator 42 and so on), each of the inverter control circuits 40 and 50 may alternatively be provided with a single control unit having, for example, a memory storage and a micro-processor such that the functions of the plurality of control units mentioned above is batch-processed with software.

Furthermore, although the switching of the rotational rate is performed based on the switching of the weft types, the switching of the rotational rate may alternatively be performed based on other weaving conditions of the loom. For example, as an alternative to changing the rotational rate based on the timing of a type of weft yarn reaching the end of the warp shed, the switching of the rotational rate may be performed based on the shedding conditions of the warp-shedding unit. In that case, when changing the output frequency from a low frequency value to a higher frequency value for switching the rotational rate during steady operation of the induction motor, the output voltage may be increased to the overvoltage value.

The technical scope of the present invention is not limited to the above embodiments, and modifications are permissible within the scope and spirit of the present invention. The present invention is not limited to textile machinery, and may be applied to common industrial machinery that is driven by an induction motor. For example, the present invention is applicable to any type of an apparatus that includes an induction motor as a driving source and requires rapid change of the rotational rate of the induction motor.

## Claims

1. A method for driving an induction motor, wherein a variable-voltage variable-frequency inverter included in a driving device for the induction motor outputs an AC voltage to the induction motor to rotate the induction motor, the AC voltage corresponding to a frequency determined based on a rotational rate of the induction motor, the method comprising:
a first step for increasing an output frequency from a first frequency value to a second frequency value by the inverter during a steady operation of the induction motor, the inverter increasing an output voltage from a first normal-state voltage value to an overvoltage value as the output frequency approaches the second frequency value; and
a second step for decreasing the output voltage from the overvoltage value to a second normal-state voltage value by the inverter while maintaining the output frequency at the second frequency value.

2. The method according to Claim 1, wherein a first target voltage value corresponding to the second frequency value is preliminarily determined by the inverter, and
wherein the inverter switches the output frequency from the first frequency value to the second frequency value in the first step, and switches the output voltage from the first normal-state voltage value to the overvoltage value in the first step based on the first target voltage value.

3. The method according to Claim 1, wherein a first target voltage value corresponding to the second frequency value is preliminarily determined by the inverter,
wherein the inverter gradually increases the output frequency from the first frequency value to the second frequency value in the first step, and gradually increases the output voltage from the first normal-state voltage value to the overvoltage value in the first step based on the first target voltage value.

4. The method according to Claim 1, wherein the inverter gradually increases the output frequency from the first frequency value to the second frequency value and compensates for a primary voltage and a slip frequency of the induction motor by a vector operation in the first step.

5. The method according to Claim 1, wherein the inverter performs the second step after a predetermined time period during which the overvoltage value corresponding to the second frequency value is output as the output voltage.

6. The method according to Claim 1, wherein, after increasing the output voltage from the first normal-state voltage value to the overvoltage value corresponding to the second frequency value in the first step, the inverter performs the second step when the rotational rate of the induction motor substantially reaches a rotational rate corresponding to the second frequency value.

7. The method according to Claim 6, wherein the first step comprises a sub-step for detecting the slip frequency value of the induction motor corresponding to the rotational rate of the induction motor, the slip frequency value being determined based on the relationship between an output current value and an exciting current for the induction motor.

8. The method according to Claim 1, wherein the inverter performs the second step after the output frequency reaches the second frequency value.

9. The method according to Claim 1, wherein the first target voltage value for the output voltage is preliminarily determined such that the first target voltage value at the end of the first step is set higher than the second normal-state voltage value, and the second target voltage value for the output voltage is preliminarily determined such that the second target voltage value for the second step decreases towards the second normal-state voltage value at a predetermined decreasing rate.

10. A method for driving an induction motor, wherein a variable-voltage variable-frequency inverter included in a driving device for the induction motor outputs an AC voltage to the induction motor to rotate the induction motor, the AC voltage corresponding to a frequency determined based on a rotational rate of the induction motor, the method comprising:
a first step for increasing an output frequency from a first frequency value to a second frequency value by the inverter during a steady operation of the induction motor, the inverter increasing an output voltage from a first normal-state voltage value to an overvoltage value, the overvoltage value corresponding to a third frequency value between the first frequency value and the second frequency value,; and
a third step for decreasing the output voltage from the overvoltage value to a second normal-state voltage value by the inverter, the second normal-state voltage value corresponding to the second frequency value.
